# EUROPEAN PATENT APPLICATION

(11) **EP 4 564 490 A1**
(43) Date of publication of application: **04.06.2025**
(21) Application number: 23860391.4
(22) Date of filing: 30.08.2023
(51) Int. Cl.: H01M 8/2465, H01M 8/0204, H01M 8/12, H01M 8/1213, H01M 8/2432, H01M 8/2475

(54) **ELECTROCHEMICAL CELL DEVICE, MODULE, AND MODULE HOUSING DEVICE**

(30) Priority: 31.08.2022 JP 2022137713
(71) Applicant: Kyocera Corporation, Kyoto-shi, Kyoto 612-8501 (JP)
(72) Inventor: FURUUCHI, Fumito, Kyoto-shi, Kyoto 612-8501 (JP)
(74) Representative: Viering, Jentschura & Partner mbB Patent- und Rechtsanwälte
(86) International application number: PCT/JP2023/031419
(87) International publication number: WO 2024/048629

(57) **Abstract**

An electrochemical cell device includes a plurality of electrochemical cells arranged in a first direction, and including a first cell and a second cell. The plurality of electrochemical cells each include an element portion, a support body, and a fixing material. The support body supports the element portion. The fixing material fixes the element portion and the support body. The first cell is different from the second cell in a position of the fixing material when viewed in a plan view in the first direction.

## Description

### TECHNICAL FIELD

The present disclosure relates to an electrochemical cell device, a module, and a module housing device.

### BACKGROUND OF INVENTION

In recent years, various fuel cell stack devices, each including a plurality of fuel cells, have been proposed as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: JP 2015-35417 A

### SUMMARY

An electrochemical cell device according to an aspect of an embodiment includes a plurality of electrochemical cells arranged in a first direction, and including a first cell and a second cell. Each of the plurality of electrochemical cells includes an element portion, a support body, and a fixing material. The support body supports the element portion. The fixing material fixes the element portion and the support body. The first cell is different from the second cell in a position of the fixing material when viewed in a plan view in the first direction.

A module of the present disclosure includes the electrochemical cell device described above and a storage container housing the electrochemical cell device.

A module housing device of the present disclosure includes the module described above, an auxiliary device that operates the module, and an external case housing the module and the auxiliary device.

### BRIEF DESCRIPTION OF THE DRAWINGS

FIG. 1 is a cross-sectional view illustrating an example of an electrochemical cell device according to a first embodiment.
FIG. 2 is an enlarged view of a region A illustrated in FIG. 1.
FIG. 3 is a plan view illustrating an example of a layout of a fixing material according to the first embodiment.
FIG. 4 is a cross-sectional view illustrating an example of the electrochemical cell device according to the first embodiment.
FIG. 5 is a cross-sectional view illustrating an example of an electrochemical cell device according to a second embodiment.
FIG. 6 is a plan view illustrating an example of a layout of a fixing material according to the second embodiment.
FIG. 7 is a cross-sectional view illustrating an example of an electrochemical cell device according to a third embodiment.
FIG. 8 is an exploded perspective view illustrating an example of a module housing device according to an embodiment.

### DESCRIPTION OF EMBODIMENTS

In the above-described fuel cell stack device, for example, a variation in temperature occurs during power generation in some cases, and there is room for improvement in battery performance.

It is expected to provide an electrochemical cell device, a module, and a module housing device having improved performance.

Embodiments of an electrochemical cell device, a module, and a module housing device disclosed in the present application will be described below in detail with reference to the accompanying drawings. Note that the disclosure is not limited by the following embodiments.

The drawings are schematic and the dimensional relationships between elements, the proportions of the elements, and the like may differ from the actual ones. There may be differences between the drawings in the dimensional relationships, proportions, and the like.

### First Embodiment

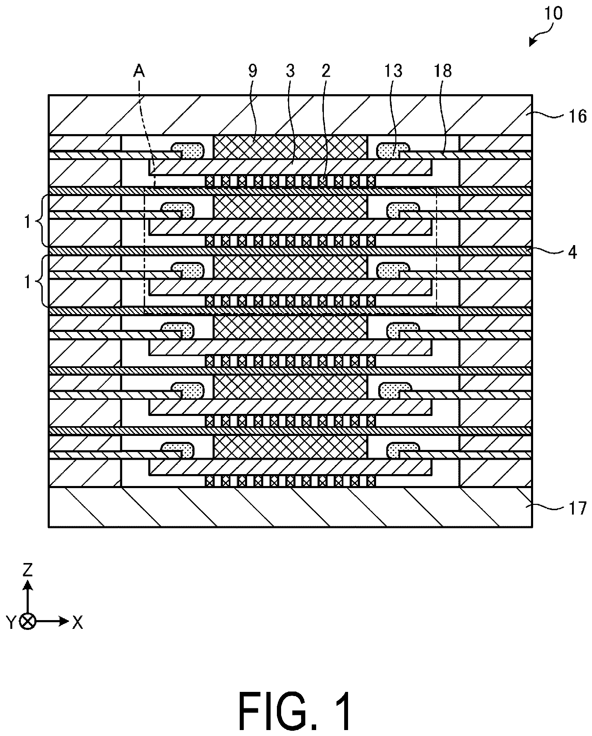

First, with reference to FIG. 1 to FIG. 3, an example of a solid oxide fuel cell will be described as an electrochemical cell according to a first embodiment. The electrochemical cell device may include a cell stack including a plurality of electrochemical cells. The electrochemical cell device including the plurality of electrochemical cells is simply referred to as a cell stack device.

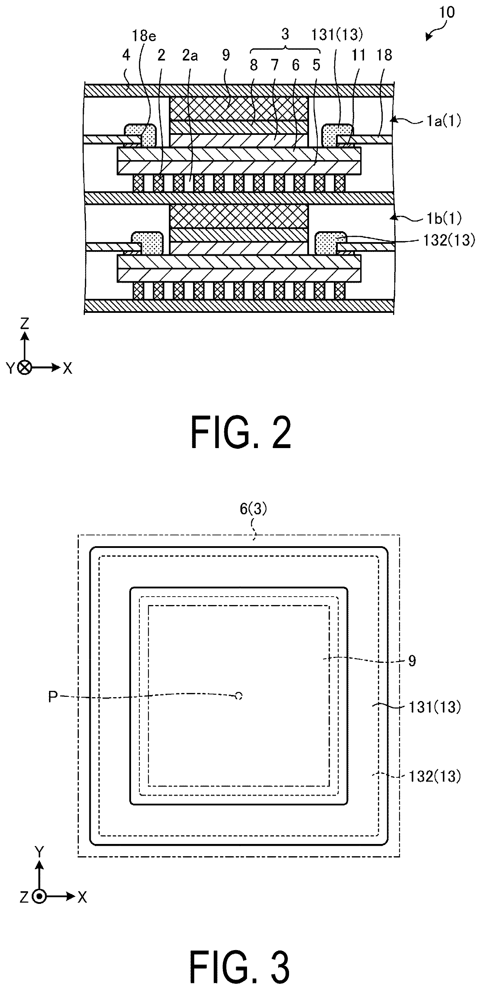

FIG. 1 is a cross-sectional view illustrating an example of the electrochemical cell according to the first embodiment. FIG. 2 is an enlarged view of a region A illustrated in FIG. 1. Note that in FIG. 1 and FIG. 2, a part of configurations of the electrochemical cell is exaggerated and a part thereof is omitted. Hereinafter, the electrochemical cell may be simply referred to as a cell.

As illustrated in FIG. 1, an electrochemical cell device 10 includes a plurality of cells 1 and end plates 16 and 17. The plurality of cells 1 are arranged in a Z axis direction as a first direction. The end plate 16 is located at the end portion of the electrochemical cell device 10 on the positive side in the Z axis direction, and the end plate 17 is located at the end portion of the electrochemical cell device 10 on the negative side in the Z axis direction. The end plates 16 and 17 press and fix the plurality of cells 1 in the layering direction. The electrochemical cell device 10 according to the present embodiment is a flat plate-type cell stack device in which the plurality of flat plate-type cells 1 are layered. Note that FIG. 1 illustrates the electrochemical cell device 10 in which six cells 1 are layered, but the number of cells 1 is not limited to this.

The cell 1 includes a first current collector 2, an element portion 3, a second current collector 9, a sealing material 11, a fixing material 13, and a support body 18.

The first current collector 2 is located on the negative side in the Z axis direction of the element portion 3. The first current collector 2 includes a gas-flow passage 2a through which a fuel gas flows. The first current collector 2 allows the gas flowing in the gas-flow passage 2a to permeate to a fuel electrode 5. The first current collector 2 has electrical conductivity and collects electricity generated in the element portion 3 to an interconnector 4.

The material of the first current collector 2 includes, for example, an iron group metal component and an inorganic oxide. For example, the iron group metal component may be nickel (Ni) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb. The material of the first current collector 2 may be, for example, a metal or an alloy. For example, ferritic stainless steel containing chromium has electrical conductivity and is less likely to decrease in strength even when it comes into contact with a fuel gas such as a hydrogen-containing gas.

The second current collector 9 is located on the positive side in the Z axis direction of the element portion 3. The second current collector 9 may have gas permeability. The second current collector 9 may include a gas-flow passage through which a gas flows. The material of the second current collector 9 may be, for example, a metal or an alloy. For example, ferritic stainless steel containing chromium has electrical conductivity and is not easily oxidized even when it comes into contact with an oxygen-containing gas such as air. The second current collector 9 may include a base member and a coating layer of an electrically conductive oxide that covers a surface of the base member.

The element portion 3 includes the fuel electrode 5, a solid electrolyte layer 6, an intermediate layer 7, and an air electrode 8.

The fuel electrode 5 is an example of a first electrode connected to the first current collector 2. As the material of the fuel electrode 5, a commonly known material may be used. As the fuel electrode 5, any of porous electrically conductive ceramics, for example, ceramics containing ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is in solid solution may be referred to as stabilized zirconia. Stabilized zirconia may also include partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

As illustrated in FIG. 2, the fuel electrode 5 in a plan view in the Z axis direction may have the same size as the solid electrolyte layer 6. The fuel electrode 5 may be larger or smaller than the solid electrolyte layer 6.

The air electrode 8 is an example of a second electrode connected to the second current collector 9. The air electrode 8 has gas permeability. The open porosity of the air electrode 8 may be, for example, in the range of 20% to 50%, particularly in the range of 30% to 50%. The open porosity of the air electrode 8 may also be referred to as the porosity of the air electrode 8.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x satisfies 0 < x < 1, and y satisfies 0 < y < 1.

The intermediate layer 7 functions as a diffusion suppression layer. When strontium (Sr) contained in the air electrode 8 diffuses into the solid electrolyte layer 6, a resistance layer of SrZrO₃ is formed in the solid electrolyte layer 6. The intermediate layer 7 makes it difficult for Sr to diffuse, thereby making it difficult for SrZrO₃ to be formed in the solid electrolyte layer 6.

The material of the intermediate layer 7 is not particularly limited as long as the material is not likely to cause the diffusion of elements between the air electrode 8 and the solid electrolyte layer 6 in general. The material of the intermediate layer 7 may contain, for example, cerium oxide (CeO₂) in which rare earth elements other than cerium (Ce) are in solid solution. As such rare earth elements, for example, gadolinium (Gd), samarium (Sm), or the like may be used. Note that the element portion 3 need not include the intermediate layer 7.

The interconnector 4 is interposed between adjacent cells 1 among the plurality of cells 1. The interconnector 4 is located between the adjacent cells 1. The interconnector 4 electrically connects in series the first current collector 2 of one of the adjacent cells 1 to the second current collector 9 of the other of the adjacent cells 1.

The interconnector 4 is dense, and makes the leakage of the fuel gas flowing through the gas-flow passage 2a included in the first current collector 2, and leakage of the oxygen-containing gas flowing outside the first current collector 2 less likely to occur. The interconnector 4 may have a relative density of 93% or more; particularly 95% or more.

A metal, an alloy such as stainless steel, or the like may be used as the material of the interconnector 4. For example, ferritic stainless steel containing chromium has electrical conductivity, and is unlikely to be reduced and also unlikely to be oxidized even when it comes into contact with a fuel gas such as a hydrogen-containing gas and an oxygen-containing gas such as air.

Note that the interconnector 4 may be integrated with the first current collector 2 or the second current collector 9, or the first current collector 2 or the second current collector 9 may also serve as the interconnector 4. The materials of the first current collector 2, the interconnector 4, and the second current collector 9 may be the same or different from each other.

The sealing material 11 is located between the solid electrolyte layer 6 and the support body 18. For example, an electrically conductive brazing material such as silver solder may be used as the material of the sealing material 11. For example, amorphous glass or crystalline glass, having low electrical conductivity, may be used as the material of the sealing material 11. The sealing material 11 may contain, for example, an insulating oxide having thermal resistance, such as forsterite. Thus, the sealing material 11 increases the adhesiveness between the solid electrolyte layer 6 and the support body 18, thereby making it possible to enhance the durability of the electrochemical cell device 10. Note that the cell 1 need not include the sealing material 11.

The fixing material 13 fixes the element portion 3 and the support body 18. The fixing material 13 may be made using a material having low electrical conductivity like glass. As the specific materials of the fixing material 13, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, an SiO₂-MgO-based material may be used.

Note that when the sealing material 11 is not provided between the element portion 3 and the support body 18, the fixing material 13 may be or need not be located between the element portion 3 and the support body 18. The larger the contact area between the element portion 3 and the support body 18, the more firmly the fixing material 13 can fix the element portion 3 and the support body 18.

The support body 18 supports the element portion 3. The support body 18 may be, for example, a plate-like metal member extending along the XY plane. The support body 18 has an opening 18e that penetrates in the thickness direction (Z axis direction). The opening 18e is covered with the fixing material 13. The support body 18 may be, for example, a separator that separates the fuel gas atmosphere and the oxygen-containing gas atmosphere in the cell 1.

In each of the cells 1 included in the electrochemical cell device 10, both end portions in an X axis direction and a Y axis direction are likely to have a lower temperature than the central portion in the X axis direction and the Y axis direction. For this reason, in the element portions 3 close to both end portions in the X axis direction and the Y axis direction, there is a concern that the power generation capability is lowered as compared with the element portions 3 located in the central portion in the X axis direction and the Y axis direction and the cell performance of the cell 1 as a whole is lowered.

In the present embodiment, the power generation capability can be improved by, for example, making the positions of the fixing materials 13 located in the respective cells 1 different from each other. In the present embodiment, the fixing materials 13 are different in position when viewed in a plan view in the first direction (Z axis direction).

FIG. 3 is a plan view illustrating an example of a layout of a fixing material according to the first embodiment. Note that in FIG. 3, for example, some components such as the interconnector 4 and the support body 18 are not illustrated.

As illustrated in FIG. 2 and FIG. 3, a fixing material 131 included in a cell 1a as the first cell and a fixing material 132 included in a cell 1b as the second cell are different in position when viewed in a plan view in the first direction (Z axis direction). Here, "are different in position when viewed in a plan view in the first direction (Z axis direction)" means that a part or all of the fixing material 131 and the fixing material 132 do not overlap in a plan view in the first direction (Z axis direction). More specifically, in a portion where the fixing material 131 or the fixing material 132 is located in a plan view in the first direction (Z axis direction), the area ratio of a portion where the fixing material 131 and the fixing material 132 do not overlap is 1% or more. As illustrated in FIG. 2 and FIG. 3, the distance between a center P of the element portion 3 and the fixing material 13 when viewed in a plan view in the first direction (Z axis direction) may be larger in the cell 1a than in the cell 1b. The portion where the fixing material 131 and the fixing material 132 do not overlap in a plan view may be located in the entire area around the center P of the element portion 3 as illustrated in FIG. 3, for example. The portion where the fixing material 131 and the fixing material 132 do not overlap in a plan view may be located in at least one arbitrary direction from the center P of the element portion 3, and the fixing material 131 and the fixing material 132 may overlap in the other directions.

As described above, by making the positions of the fixing materials 13 when the cell 1a and the cell 1b are each viewed in a plan view different from each other, the power generation capability is improved. A factor is presumably as follows. By making the positions of the fixing materials 13 when viewed in a plan view in the first direction (Z axis direction) different from each other, heat of the cell 1b in which the flowing volume of the oxygen-containing gas is small and heat dissipation is difficult is easily transferred to the cell 1a in which the flowing volume of the oxygen-containing gas is large and heat dissipation is easy. Thus, the heat dissipation in the central portion of the cell 1 in the X axis direction and the Y axis direction is improved. As a result, the temperatures of both end portions in the X axis direction and the Y axis direction increase, and the power generation capability of the cell 1 as a whole is improved.

Note that although FIG. 1 and FIG. 2 show an example in which the fixing materials 131 and the fixing materials 132 are alternately positioned, the present invention is not limited to this example. For example, at least one of the fixing materials 13 included in the plurality of cells 1 may be the fixing material 131 or the fixing material 132. The cells 1 including the fixing material 131 or the cells 1 including the fixing material 132 may be arranged.

FIG. 1 and FIG. 2 illustrate an example in which the distances between the center P of the element portion 3 and the fixing material 13 in a plan view are different from each other in the X axis direction and the Y axis direction, but the present invention is not limited thereto. For example, the distance between the center P of the element portion 3 and the fixing material 131 and the distance between the center P of the element portion 3 and the fixing material 132 in a plan view may be different only in the X axis direction and may be the same in the Y axis direction.

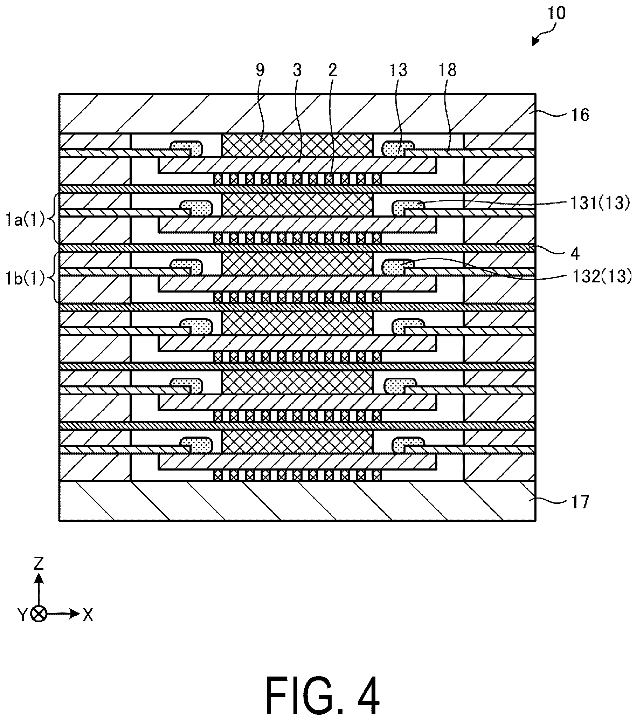

FIG. 4 is a cross-sectional view illustrating an example of the electrochemical cell device according to the first embodiment. As illustrated in FIG. 4, the center of gravity of the inner contour of the fixing material 131 in a plan view may be shifted from the center of gravity of the inner contour of the fixing material 132. In this case, a site where the distance between the fixing material 131 and the center P of the element portion 3 in the cell 1a is large and a site where the distance between the fixing material 132 and the center P of the element portion 3 in the cell 1b is small overlap each other. As such, heat of the site of the cell 1b where heat dissipation is difficult is easily transferred to the site of the cell 1a where heat dissipation is easy, and the power generation capability of the cell 1 as a whole is improved.

### Second Embodiment

In each of the cells 1 layered in the Z axis direction (first direction), both end portions in the Z axis direction are likely to have a lower temperature than the central portion in the Z axis direction. For this reason, the power generation capability of the element portions 3 included in the cells 1 located at both end portions in the Z axis direction is lowered as compared with the element portions 3 included in the cells 1 located at the central portion in the Z axis direction, and there has been a concern that the power generation capability of the electrochemical cell device 10 as a whole is lowered.

In the present embodiment, for example, by making the positions of the fixing materials 13 included in the cells 1 located at both end portions in the Z axis direction and the positions of the fixing materials 13 included in the cells 1 located at the central portion in the Z axis direction different from each other, the power generation capability can be improved.

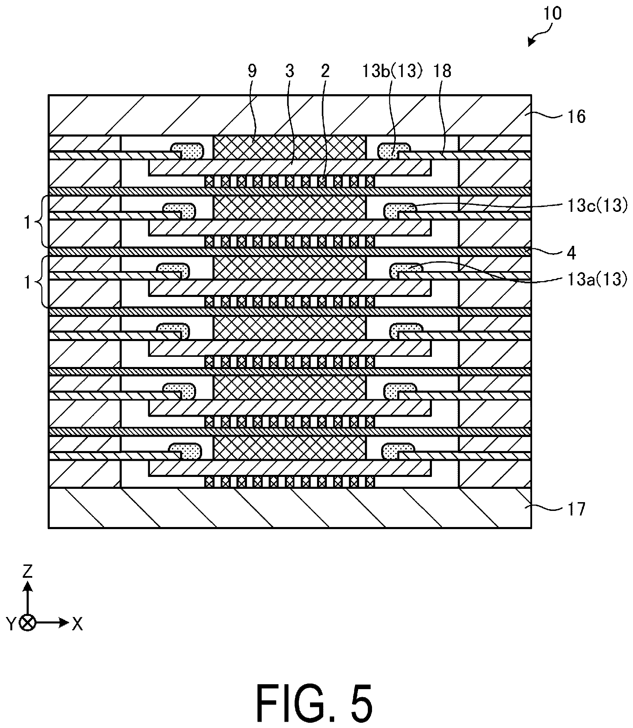

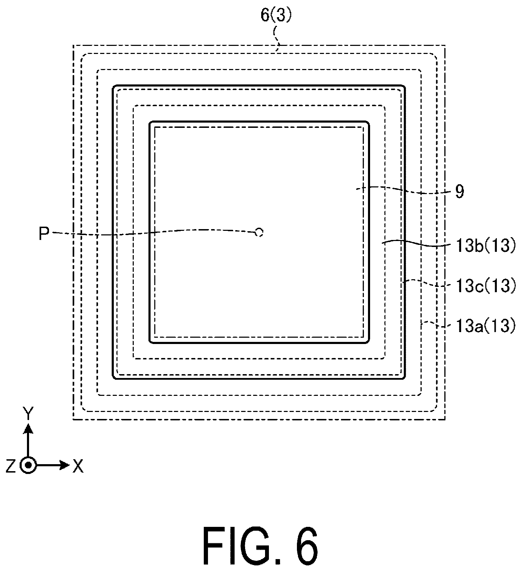

FIG. 5 is a cross-sectional view illustrating an example of an electrochemical cell device according to a second embodiment. FIG. 6 is a plan view illustrating an example of a layout of a fixing material according to the second embodiment.

As illustrated in FIG. 5, the electrochemical cell device 10 may include fixing materials 13a to 13c. Among the plurality of cells 1 arranged in the Z axis direction (first direction), the cells 1 located at the central portion in the first direction each include the fixing material 13a. The cells 1 located at both end portions in the first direction each include the fixing material 13b. The cell 1 located between the cell 1 including the fixing material 13a and the cell 1 including the fixing material 13b includes the fixing material 13c.

In a plan view in the first direction, the distance between the center P of the element portion 3 and the fixing material 13a is larger than the distance between the center P of the element portion 3 and the fixing material 13b. In a plan view in the first direction, the distance between the center P of the element portion 3 and the fixing material 13c is smaller than the distance between the center P of the element portion 3 and the fixing material 13a, and larger than the distance between the center P of the element portion 3 and the fixing material 13b.

As described above, by making the distances between the center P of the element portion 3 and the fixing materials 13 in a plan view different from each other, power generation capability is improved. A factor is presumably as follows. By making the positions of the fixing materials 13 different from each other in a plan view in the first direction (Z axis direction), heat is easily dissipated at a site where the flowing volume of the oxygen-containing gas is large in the cell 1 located at the central portion in the Z axis direction. Thus, the heat dissipation performance inside the electrochemical cell device 10 is improved. As a result, the temperature of the cells 1 located at both end portions in the Z axis direction increases, and the power generation capability is improved.

Note that FIG. 5 and FIG. 6 show an example in which in a plan view, the distance between the center P of the element portion 3 and the fixing material 13c is smaller than the distance between the center P of the element portion 3 and the fixing material 13a and larger than the distance between the center P of the element portion 3 and the fixing material 13b, but the present invention is not limited to this example. For example, in a plan view, the distance between the center P of the element portion 3 and the fixing material 13c may be larger than the distance between the center P of the element portion 3 and the fixing material 13a, or may be smaller than the distance between the center P of the element portion 3 and the fixing material 13b.

### Third Embodiment

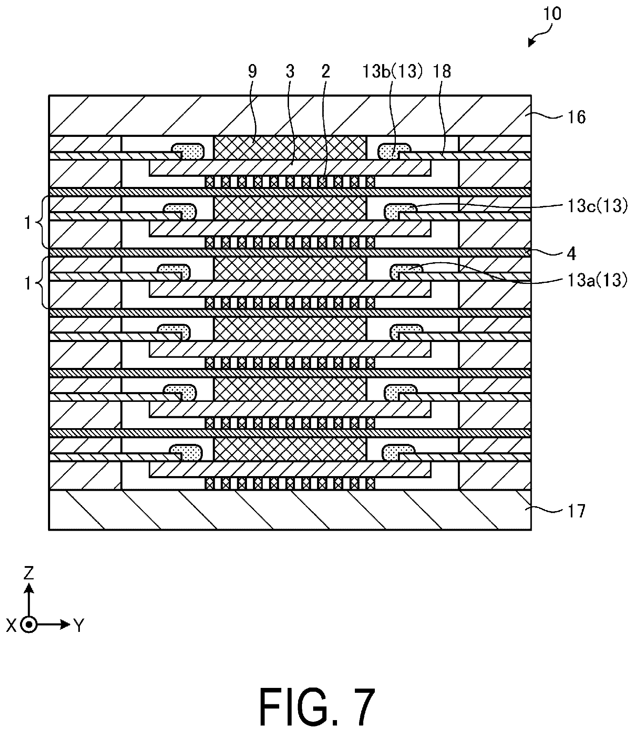

FIG. 7 is a cross-sectional view illustrating an example of an electrochemical cell device according to a third embodiment. The electrochemical cell device 10 illustrated in FIG. 7 is different from the electrochemical cell device 10 according to each of the embodiments described above in that the cross-sectional shape along the ZX plane and the cross-sectional shape along the YZ plane are different from each other.

Specifically, in the electrochemical cell device 10 according to the first embodiment, the cross-sectional shape along the YZ plane may be the same as that of the electrochemical cell device 10 according to the second embodiment. As described above, by making the positions of the fixing materials 13 included in the respective cells 1 different from each other, the power generation capability of the cells 1 as a whole and the power generation capability of the electrochemical cell device 10 as a whole are improved.

### Module and Module Housing Device

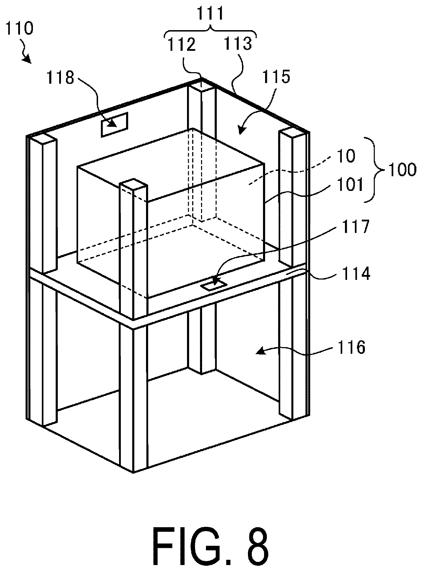

Descriptions of a module and a module housing device using the electrochemical cell device 10 according to the above-described embodiments will now be given with reference to FIG. 8.

FIG. 8 is an exploded perspective view illustrating an example of a module housing device according to an embodiment. A module housing device 110 according to the present embodiment includes an external case 111, a module 100, and an auxiliary device (not illustrated).

The module 100 includes a storage container 101, and the electrochemical cell device 10 housed in the storage container 101. A reformer (not illustrated) may be disposed above the electrochemical cell device 10. Such a reformer generates a fuel gas by reforming a raw fuel such as natural gas or kerosene and supplies the fuel gas to the cell 1.

As described above, the module 100 houses the electrochemical cell device 10 with the improved power generation capability. This configuration makes it possible to provide the module 100 with the improved power generation capability.

The auxiliary device operates the module 100. The module 100 and the auxiliary device are housed in the external case 111. Note that in FIG. 8, the configuration is partially omitted.

The external case 111 of the module housing device 110 includes a support 112 and an external plate 113. A dividing plate 114 vertically partitions the interior of the external case 111. The space above the dividing plate 114 in the external case 111 is a module housing chamber 115 housing the module 100. The space below the dividing plate 114 in the external case 111 is an auxiliary device housing chamber 116 housing the auxiliary device that operates the module 100. Note that in FIG. 8, the auxiliary device housed in the auxiliary device housing chamber 116 is omitted.

The dividing plate 114 is provided with an air circulation hole 117 for causing air in the auxiliary device housing chamber 116 to flow to the module housing chamber 115 side. The external plate 113 for forming the module housing chamber 115 is provided with an exhaust hole 118 for discharging air inside the module housing chamber 115.

In the module housing device 110, as described above, the module 100 with the improved performance is provided in the module housing chamber 115. This configuration makes it possible to provide the module housing device 110 with the improved performance.

### Other Embodiments

Electrochemical cell devices according to other embodiments will be described.

In the embodiments described above, a fuel cell, a fuel cell stack device, a fuel cell module, and a fuel cell device have been illustrated as examples of the "electrochemical cell," the "electrochemical cell device," the "module," and the "module housing device." However, as other examples, these may be an electrolytic cell, an electrolytic cell stack device, an electrolytic module, and an electrolytic device, respectively. The electrolytic cell includes a first electrode and a second electrode and decomposes water vapor into hydrogen and oxygen or decomposes carbon dioxide into carbon monoxide and oxygen by being supplied with electric power. Although an oxide ion conductor or a hydrogen ion conductor is illustrated as an example of the electrolyte material of the electrochemical cell in each of the above embodiments, the electrolyte material may be a hydroxide ion conductor. The electrolytic cell, electrolytic cell stack device, electrolytic module, and electrolytic device discussed above can have electrolytic performance.

While the present disclosure has been described in detail, the present disclosure is not limited to the aforementioned embodiments, and various changes, improvements, and the like can be made without departing from the gist of the present disclosure.

As described above, (1) an electrochemical cell device according to an embodiment includes a plurality of electrochemical cells arranged in a first direction, and including a first cell and a second cell. Each of the plurality of electrochemical cells includes an element portion, a support body supporting the element portion, and a fixing material fixing the element portion and the support body. The first cell is different from the second cell in a position of the fixing material when viewed in a plan view in the first direction.

(2) In the electrochemical cell device according to (1), the first cell has a distance between the center of the element portion and the fixing material when viewed in the plan view in the first direction may be larger than the second cell.

(3) **In** the electrochemical cell device according to (1) or (2), the first cell may be located at a central portion in the first direction, and the second cell may be located at an end portion in the first direction.

(4) The module according to an embodiment includes the electrochemical cell device according to any one of (1) to (3), and a storage container housing the electrochemical cell device.

(5) The module housing device according to an embodiment includes the module according to (4), an auxiliary device configured to operate the module, and an external case housing the module and the auxiliary device.

Note that the embodiments disclosed herein shall be deemed to be exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1 Cell
3 Element portion
5 Fuel electrode
6 Solid electrolyte layer
7 Intermediate layer
8 Air electrode
10 Electrochemical cell device
13 Fixing material
18 Support body
100 Module
110 Module housing device

## Claims

1. An electrochemical cell device comprising:
a plurality of electrochemical cells arranged in a first direction, and comprising a first cell and a second cell,
wherein each of the plurality of electrochemical cells comprises:
an element portion;
a support body supporting the element portion; and
a fixing material fixing the element portion and the support body, and
the first cell is different from the second cell in a position of the fixing material when viewed in a plan view in the first direction.

2. The electrochemical cell device according to claim 1, wherein the first cell has a distance between a center of the element portion and the fixing material when viewed in the plan view in the first direction is larger than the second cell.

3. The electrochemical cell device according to claim 1 or 2, wherein
the first cell is located at a central portion in the first direction, and
the second cell is located at an end portion in the first direction.

4. A module comprising:
the electrochemical cell device according to any one of claims 1 to 3; and
a storage container housing the electrochemical cell device.

5. A module housing device comprising:
the module according to claim 4;
an auxiliary device configured to operate the module; and
an external case housing the module and the auxiliary device.
